# EUROPEAN PATENT APPLICATION

(11) **EP 3 915 896 A1**
(43) Date of publication of application: **01.12.2021**
(21) Application number: 20745613.8
(22) Date of filing: 09.01.2020
(51) Int. Cl.: B65D 25/52, B65D 83/08, B65D 43/16

(54) **HOUSEHOLD-USE TISSUE STORAGE CONTAINER**

(30) Priority: 25.01.2019 JP 2019010734
(71) Applicant: DAIO PAPER CORPORATION, Shikokuchuo-shi Ehime 799-0492 (JP)
(72) Inventor: MIURA, Akiteru, Shikokuchuo-shi, Ehime 799-0113 (JP)
(74) Representative: Held, Stephan
(86) International application number: PCT/JP2020/000385
(87) International publication number: WO 2020/153132

(57) **Abstract**

A household-use tissue storage container 100 has a braking means 4 provided to a container body 1, the braking means contacting a portion of a closable lid 2 that is open and applying frictional force to the rotating closeable lid 2, thereby enabling the suppression of the rotating momentum of the closeable lid 2. As a result, the household-use tissue storage container 100 does not shift from the location where placed nor does the orientation thereof change due to the reaction caused by the closeable lid 2 being opened. Thus, the closeable lid 2 of the household-use tissue storage container 100 that is placed at a desired location can be suitably opened, and household-use tissue P can be taken out of the storage container 100 and used.

## Description

### Technical Field

The present invention relates to a household-use tissue storage container.

### Background Art

Conventionally known storage containers for household-use tissues such as wet tissues have an open/close lid that is biased in an opening direction by a biasing member such as a leaf spring and can be latched in a closed state by a predetermined latch. The open/close lid can be opened by a user in a single operation of a button provided on the latch (for example, see patent document 1).

### Citation List

### Patent Literature

[Patent Document 1] JP 5280743 B2

### Summary of Invention

### Technical Problem

However, in response to the operation of the button of the storage container according to the above patent document 1, the open/close lid, which is biased by the biasing member, is opened all at once without slowing down until fully opened and shakes unsteadily due to the opening reaction. As a result of the shaking, the container itself wobbles and may shift from its original position. When the storage container shifts from its original position and changes its orientation, it may be difficult to take out the household-use tissue from the storage container.

An object of the present invention is to provide a household-use tissue storage container having an open/close lid that can be readily opened.

### Solution to Problem

In order to achieve the object, according to the invention recited in claim 1, there is provided a household-use tissue storage container including:
a container body that stores household-use tissue inside and has an outlet through which the household-use tissue is taken out; and
an open/close lid that is pivotably provided on the container body and closes the outlet; wherein
the container body has at least a part made of an elastic material,
the container body includes:
   a latch that latches the open/close lid in a closed state and that opens the open/close lid in response to being unlatched;
a biasing means that biases the open/close lid in an opening direction; and
at least one brake that is integrally formed with the part made of the elastic material and that is in contact with a part of the open/close lid in an opened state.

According to the household-use tissue storage container having such a configuration, the brake of the container body is in contact with a part of the opened open/close lid and applies a frictional force to the pivoting open/close lid so as to suppress the momentum of the pivoting open/close lid. Therefore, the household-use tissue storage container does not shift from its original position or change its orientation due to the reaction of opening of the open/close lid.

Then, it is possible to suitably open the open/close lid of the household-use tissue storage container placed at any desired position, and to take out the household-use tissue for use from the storage container.

According to the invention recited in claim 2, there is provided a household-use tissue storage container according to claim 1, wherein, in response to being in contact with the part of the open/close lid, the brake is in sliding contact with the open/close lid until the open/close lid stops pivoting.

According to the invention recited in claim 3, there is provided a household-use tissue storage container including:
a container body that stores household-use tissue inside and has an outlet through which the household-use tissue is taken out; and
an open/close lid that is pivotably provided on the container body and closes the outlet; wherein
the open/close lid has at least a part made of an elastic material,
the container body includes:
   a latch that latches the open/close lid in a closed state and that opens the open/close lid in response to being unlatched; and
   a biasing means that biases the open/close lid in an opening direction,
the open/close lid includes at least one brake that is integrally formed with the part made of the elastic material and that is in contact with a part of the container body upon the open/close lid being in an opened state.

According to the household-use tissue storage container having such a configuration, the brake of the open/close lid is in contact with a part of the container body when the open/close lid is opened, and the brake applies a frictional force to the contacting surface so as to suppress the momentum of the pivoting open/close lid. Therefore, the household-use tissue storage container does not shift from its original position or change its orientation due to the reaction of opening of the open/close lid.

Then, it is possible to suitably open the open/close lid of the household-use tissue storage container placed at any desired position, and to take out the household-use tissue for use from the storage container.

According to the invention recited in claim 4, there is provided a household-use tissue storage container according to claim 3, wherein, in response to being in contact with the part of the container body, the brake is in sliding contact with the container body until the open/close lid stops pivoting.

According to the invention recited in claim 5, there is provided a household-use tissue storage container according to any one of claims 1 to 4, wherein the at least one brake includes a plurality of brakes.

According to the invention recited in claim 6, there is provided a household-use tissue storage container according to any one of claims 1 to 5, wherein the biasing means is integrally formed with the part made of the elastic material.

### Advantageous Effects of Invention

According to the present invention, there is provided a household-use tissue storage container having an open/close lid that can be readily opened.

### Brief Description of Drawings

FIG. 1 is a perspective view showing a household-use tissue storage container according to a present embodiment.
FIG. 2 is a perspective view showing the household-use tissue storage container according to a present embodiment.
FIG. 3 is a sectional view showing the household-use tissue storage container according to the present embodiment, which is a sectional view of FIG. 1 cut through a middle portion in Y direction.
FIG. 4 is a sectional view showing the household-use tissue storage container according to the present embodiment, which is a sectional view of FIG. 2 cut through a middle portion in Y direction.
FIG. 5 is a sectional view showing the household-use tissue storage container in a state where an upper container body and a lower container body are not fitted.
FIG. 6 is a perspective view showing a modified example of a brake of the household-use tissue storage container.
FIG. 7 is a perspective view showing a modified example of a brake of the household-use tissue storage container.
FIG. 8 is a perspective view showing a modified example of a brake of the household-use tissue storage container.
FIG. 9 is a perspective view showing a modified example of a brake of the household-use tissue storage container.

### Description of Embodiments

Hereinafter, an embodiment of a household-use tissue storage container according to the present invention is described in detail with reference to the drawings. Although the embodiments described below include various technically preferable limitations for carrying out the present invention, the scope of the present invention is not limited to the following embodiments or illustrated examples.

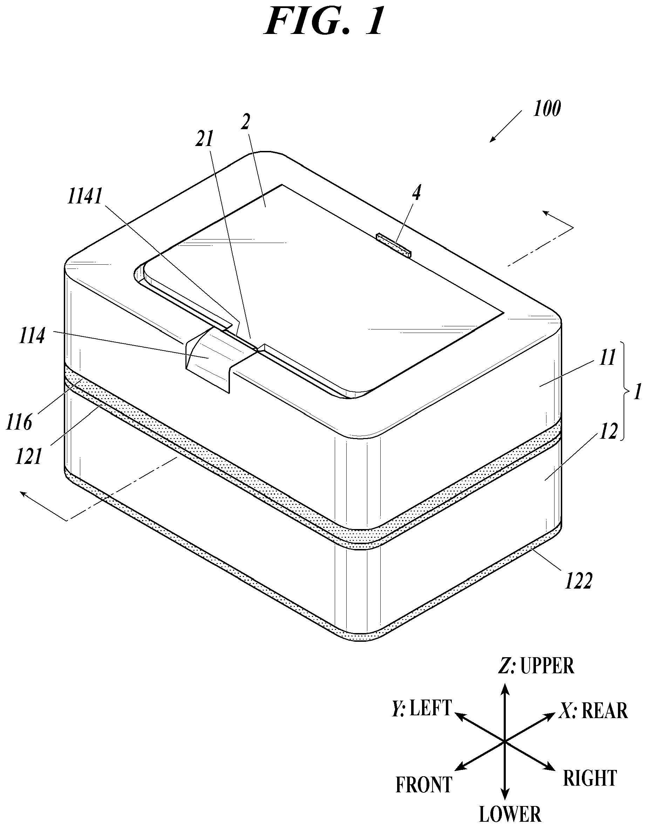

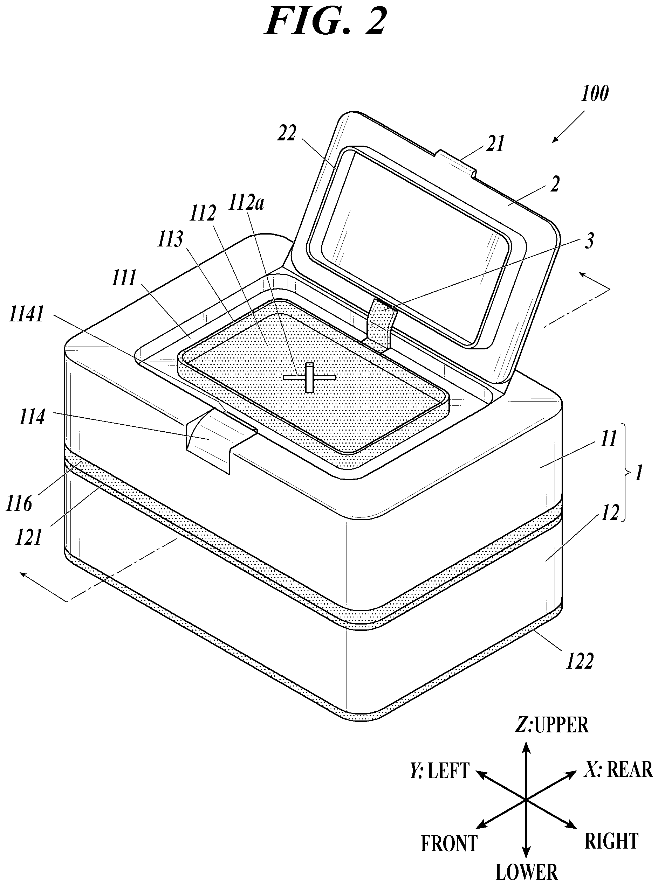

In the followings, an X-axis, Y-axis, Z-axis, front-rear direction, left-right direction, and upper-lower direction are defined as shown in FIG. 1 and FIG. 2. That is, the side of the household-use tissue storage container 100 on which the open/close lid 2 is attached and the side opposite thereto are referred to as "upper" and "lower", respectively. The side where a container body 1 and the open/close lid 2 are connected and the side opposite thereto are referred to as "rear" and "front", respectively. The right-hand side and the left-hand side when one is looking at the front surface of the container from the front side are referred to as "right" and "left", respectively. The axis along the front-rear direction is referred to as the X axis, the axis along the left-right direction is referred to as the Y axis, and the axis along the upper-lower direction is referred to as the Z axis.

### [Configuration of Embodiment]

### {Overall Configuration}

As shown in FIG. 1 to FIG. 5, for example, the household-use tissue storage container 100 includes a container body 1 that has an outlet 112a through which the inside household-use tissue P is taken out, an open/close lid 2 that is connected to the container body 1 so as to cover the outlet 112a and is freely opened and closed, a biasing means 3 that biases the open/close lid 2 in its opening direction, and a brake 4 that is in contact with a part of the opened open/close lid 2. The container body 1 has a storage space S to store the household-use tissue inside.

The container body 1 and the open/close lid 2 can be integrally formed by injection molding (double molding).

### {Household-Use Tissue}

The household-use tissue P is, for example, so-called pop-up type sheets in which small wet sheets, wet tissues, or the like are folded and stacked in alternating directions such that, when one of the wet sheets, wet tissues, or the like is pulled out, the next one is also pulled out. Another example of the household-use tissue P is a roll sheet that is a long wet sheet, wet tissue, or the like that is wound into a roll and has perforations at regular intervals in the length direction so as to be cut along the perforations and used.

### {Container Body}

As shown in FIG. 1 and FIG. 2, the container body 1 as a whole is formed in a substantially rectangular parallelepiped shape that is longer in the Y direction than in the X and Z directions. The container body 1 is vertically divided into two parts almost in the middle in the Z direction, one being an upper container body 11 constituting the upper side of the container body 1 and the other being a lower container body 12 constituting the lower side of the container body 1. The upper container body 11 and the lower container body 12 are connected to each other on the rear side of the container body 1.

The upper container body 11 and the lower container body 12 can be integrally formed by injection molding (double molding).

The dimensions of the container body 1 as a whole are preferably 60 mm to 150 mm, more preferably 80 mm to 100 mm in the X direction, preferably 80 mm to 200 mm, more preferably 145 mm to 165 mm in the Y direction, and preferably 30 mm to 100 mm, more preferably 50 mm to 70 mm in the Z direction. The thickness of each surface is preferably 0.5 mm to 3 mm, more preferably 1 mm to 2 mm.

With such dimensions and thickness, it is possible to achieve high molding efficiency and strength that is enough to cause no problem in actual use.

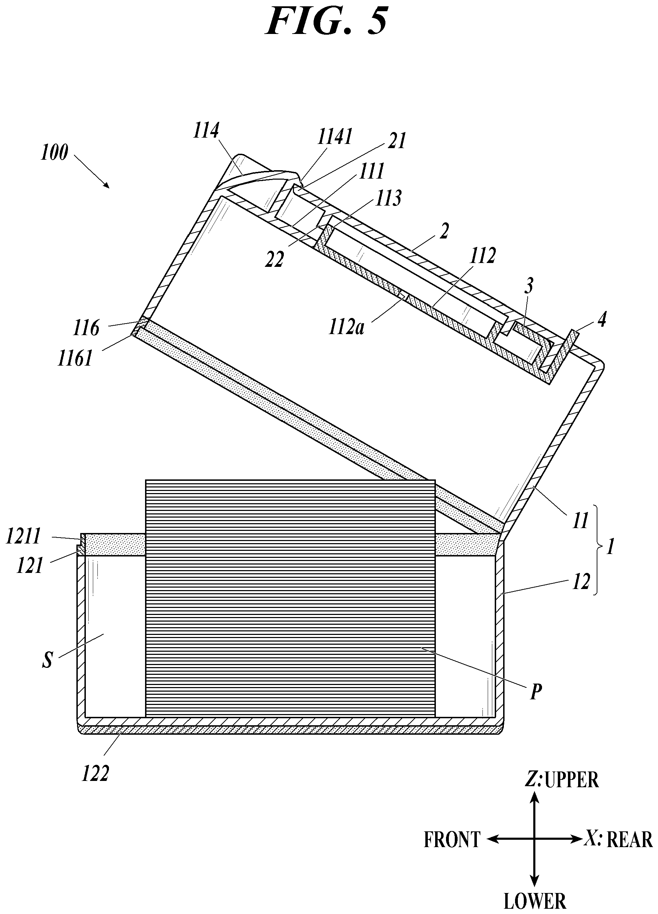

As shown in FIG. 5, the inside storage space S of the container body 1 can be exposed to the outside when the upper container body 11 pivots upward around a pivot point on the rear side where the upper container body 11 and the lower container body 12 are connected to each other.

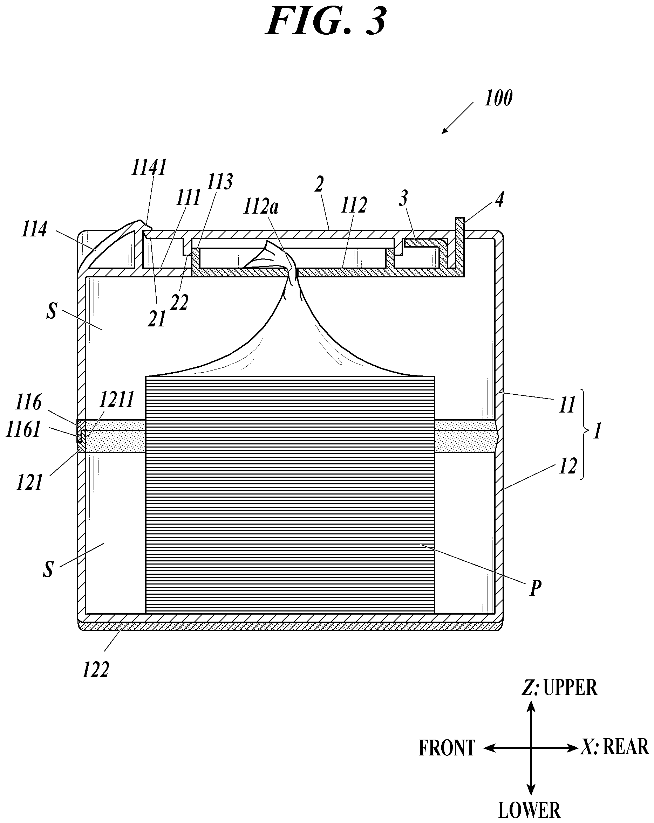

As shown in FIG. 3 to FIG. 5, when a connecting portion between the upper container body 11 and the lower container body 12 on the rear side of the container body 1 is formed so as to be thinner than the other portions of the container body 1, the rear surface of the container body can be easily bent at the connecting portion. Then, the upper container body 11 easily pivots with respect to the lower container body 12 around the connecting portion as the pivot point.

Alternatively, though productivity is lowered, the upper container body 11 and the lower container body 12 can be formed separately and connected pivotably using a hinge or the like.

The container body 1 is divided into the upper container body 11 and the lower container body 12 almost in the middle position in the Z direction in the drawings, but is more preferably divided at above the middle position in the Z direction. This reduces the possibility that an end seal portion(s) of the package is accidentally pinched when the container is closed, thereby making it easier to refill the household-use tissue P to be stored in the container body 1 while it is covered with a predetermined package.

### (Upper Container Body)

As shown in FIG. 1 to FIG. 5, the upper container body 11 is formed in a substantially rectangular parallelepiped shape having an opening lower surface and has a recessed portion 111 having a sunken recessed shape on the upper part of the upper container body 11.

An outlet 112a for taking out the household-use tissue P in the storage space S is in a take-out portion 112 in the middle of the recessed portion 111. The outlet 112a is surrounded by a body-side sealing loop 113. In other words, the recessed portion 111 surrounded by the body-side sealing loop 113 is formed as the take-out portion 112, and the take outlet 112a is formed in the middle of the take-out portion 112.

Furthermore, a fixing portion 115 is provided between the body-side sealing loop 113 and the open/close lid 2, at a portion inside the recessed portion 111 but outside the body-side sealing loop 113. A biasing means 3 described later is arranged at the fixing portion 115. One end of the biasing means 3 is arranged so as to be embedded in the recessed portion 111.

Furthermore, a latch 114 for opening and closing the open/close lid 2 is formed at the front side of the upper surface.

Around the opening lower surface, there is formed an upper fitting portion 116 that fits a lower fitting portion 121 of the lower container body 12 described later.

### (Outlet)

The outlet 112a is a hole that is formed almost in the middle of the upper surface of the upper container body and connects to the storage space S.

The outlet 112a is formed by making two intersecting cuts in FIG. 2, but the present invention is not limited thereto, and the number of cuts may be more than two. For example, three cuts connecting respective vertices of a right triangle and the center of gravity of the right triangle may be made.

The periphery of the outlet 112a is formed of a material having elasticity described later so as to apply appropriate resistance to the household-use tissue P. As a result, when a sheet of the household-use tissue P stored in the storage space S is pulled out, the next sheet of the household-use tissue P is held by the outlet 112a. Furthermore, when the household-use tissue P is a roll sheet, the outlet 112a can cut the household-use tissue P at its perforations for cutting.

### (Body-Side Sealing Loop)

As shown in FIG. 2, the body-side sealing loop 113 is a loop-shaped projection protruding in the upper direction and surrounding the outlet 112a. As shown in FIG. 3 to FIG. 5, the outer peripheral surface of the body-side sealing loop 113 is formed so as to fit the inner peripheral surface of the open/close-lid-side sealing loop 22 that is formed on the open/close lid 2 as described later.

### (Latch)

As shown in FIG. 1 to FIG. 5, the latch 114 is formed in a shape of a button and has a body-side hook 1141. The body-side hook 1141 engages with the open/close-lid-side hook 21 formed on the open/close lid 2 described later to latch the open/close lid 2 in a closed state. When a user pushes the latch 114, the body-side hook 1141 and the open/close-lid-side hook 21 are disengaged, and the open/close lid 2 is in an opened state.

### (Upper Fitting Portion)

As shown in FIG. 1 to FIG. 5, the upper fitting portion 116 is formed around the opening lower surface of the upper container body 11 except for the rear side of the opening where the upper container body 11 and the lower container body 12 are connected to each other. As shown in FIG. 3 to FIG. 5, only the outer peripheral side of the lower edge of the upper fitting portion 116 protrudes to form an upper protrusion 1161. The inner peripheral surface of the upper protrusion 1161 is formed so as to fit the outer peripheral surface of the lower protrusion 1211 of the lower fitting portion 121 formed in the lower container body 12 described later.

The upper fitting portion 116 is formed such that the upper protrusion 1161 has a dimension in the upper-lower direction of preferably 0.5 mm to 5 mm, more preferably 1 mm to 3 mm.

### (Material of Upper Container Body)

The upper container body 11 has the take-out portion 112, the body-side sealing loop 113, the biasing means 3, and the brake 4 on the upper surface that are formed of a material having elasticity (hereinafter, referred to as an "elastic material") such as a thermoplastic elastomer of a styrene-butadiene type, polyester type, polyethylene type, or urethane type. Hardness of the elastic material is preferably 20 to 90. The hardness is measured in accordance with JIS K 6253 (type A durometer).

In the upper container body 11, the upper fitting portion 116 is also formed of a similar elastic material.

The other portion(s) of the upper container body 11 is formed of a polyolefin resin material such as polyethylene or polypropylene.

They are integrally formed by injection molding (double molding).

When the hardness is less than the above range, the elastic material is too soft and difficult to be molded, which results in poor molding efficiency. Furthermore, the *biasing means 3 cannot bias the open*/*close lid 2 sufficiently.*

When the hardness is more than the above range, the hard portion around the outlet 112a increases the resistance too much and makes it difficult to take out the sheet one by one and to put fingers inside the container for pulling out the sheet. Furthermore, *the biasing means 3 biases the open*/*close lid 2 too much.*

Therefore, the hardness of the elastic material is preferably within the above range.

### (Lower Container Body)

As shown in FIG. 1 to FIG. 5, the lower container body 12 is formed in a substantially rectangular parallelepiped shape having an opening upper surface. Around the opening upper surface, there is formed a lower fitting portion 121 that fits the upper fitting portion 116 of the upper container body 11. A lower nonslip portion 122 is formed at the lower surface.

### (Lower Fitting Portion)

As shown in FIG. 1 to FIG. 5, the lower fitting portion 121 is formed around the upper opening of the lower container body 12 except for the rear side of the opening where the lower container body 12 and the upper container body 11 are connected to each other. As shown in FIG. 3 to FIG. 5, only the inner peripheral side of the upper edge of the lower fitting portion 121 protrudes to form a lower protrusion 1211. The outer peripheral surface of the lower protrusion 1211 is formed so as to fit the inner peripheral surface of the upper protrusion 1161 of the upper fitting portion 116 formed in the upper container body 11.

The lower fitting portion 121 is formed such that the lower protrusion 1211 has a dimension in the upper-lower direction of preferably 0.5 mm to 5 mm, more preferably 1 mm to 3 mm.

Alternatively, only the inner peripheral side of the upper protrusion 1161 of the upper fitting portion 116 and only the outer peripheral side of the lower protrusion 1211 of the lower fitting portion 121 may be each formed so as to protrude, such that the outer peripheral surface of the upper protrusion 1161 fits the inner peripheral surface of the lower protrusion 1211.

Alternatively, the middle portion between the inner and outer peripheral sides of the upper protrusion and both of the inner and outer peripheral sides of the lower protrusion may be each formed so as to protrude, such that the upper protrusion fits a recessed portion between the protruding sides of the lower protrusion. Conversely, both of the inner and outer peripheral sides of the upper protrusion and the middle portion between the inner and outer peripheral sides of the lower protrusion may be each formed to protrude, such that the lower protrusion fits a recessed portion between the protruding sides of the upper protrusions.

### (Lower Nonslip Portion)

The placed household-use tissue storage container 100 is less likely to slip because of the lower nonslip portion 122 that is formed by providing a portion of an elastic material on the lower surface of the lower container body 12 integrally with other portion(s).

### (Material of Lower Container Body)

The lower container body 12 has the lower fitting portion 121 and the lower nonslip portion 122 that are formed of an elastic material similar to that used in the upper container body 11. The other portion(s) of the lower container body 12 is formed of a polyolefin resin material such as polyethylene or polypropylene.

They are integrally formed by injection molding (double molding).

### {Open/Close Lid}

As shown in FIG. 1 to FIG. 5, the open/close lid 2 is a flat and substantially rectangular member that is pivotably connected to the rear side of the recessed portion 111 of the upper container body 11, and has an open/close-lid-side hook 21 on the front side and an open/close-lid-side sealing loop 22 on the lower surface side.

As shown in FIG. 1 to FIG. 5, the shape of the open/close lid 2 in a plan view in the closed state is formed to be substantially the same as that of the recessed portion 111 of the upper container body 11, so that the open/close lid 2 can be fit in the recessed portion 111 when closed.

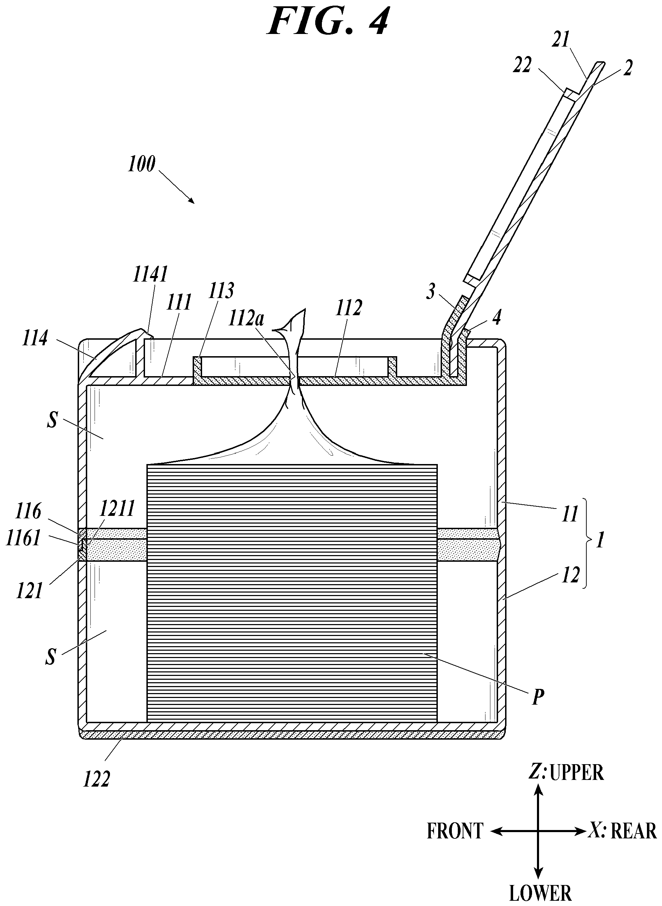

As shown in FIG. 4, a connecting portion between the open/close lid 2 and the upper container body 11 is formed so as to be thinner than the other portions. As a result, the connecting portion can be easily bent, and the open/close lid 2 easily pivots around the connecting portion as a pivot point.

### (Open/Close-Lid-Side Hook)

As shown in FIG. 1 to FIG. 5, the open/close-lid-side hook 21 is a hook protruding from the open/close lid 2 toward the front. The open/close-lid-side hook 21 engages with the body-side hook 1141 formed on the latch 114 of the upper container body 11 and latches the open/close lid in the closed state. When a user pushes the latch 114, the body-side hook 1141 and the open/close-lid-side hook 21 are disengaged, and the open/close lid 2 is in an opened state because of the biasing means 3 described later.

### (Open/Close-Lid-Side Sealing Loop)

As shown in FIG. 2, the open/close-lid-side sealing loop 22 is a loop-shaped projection protruding in the lower direction, and formed in the middle of the lower surface of the open/close lid 2 in the closed state. As shown in FIG. 3 to FIG. 5, the inner peripheral surface of the open/close-lid-side sealing loop 22 is formed so as to fit the outer peripheral surface of the body-side sealing loop 113 formed on the upper container body 11.

### (Material of Open/Close Lid)

The open/close lid 2 is formed of a polyolefin resin material such as polyethylene or polypropylene.

The open/close lid 2 and the container body 1 are integrally formed by injection molding (double molding).

### {Biasing Means}

The biasing means 3 biases the open/close lid 2 in the opening direction such that, when a user pushes the latch 114 and disengages the body-side hook 1141 and the open/close-lid-side hook 21, the open/close lid 2 is opened by pivoting on the rear connecting portion between the open/close lid 2 and the upper container body 11 as a pivot shaft.

As shown in FIG. 2 to FIG. 5, the biasing means 3 is a portion formed by an elastic material formed on the upper container body 11 so as to connect with the rear side of the body-side sealing loop 113 of the upper container body 11. In other words, the biasing means 3 is integrally formed with the body-side sealing loop 113 that is formed with the elastic material on the upper container body 11.

The biasing means 3 is formed of the same elastic material as that used for the take-out portion 112 of the upper container body 11 and the body-side sealing loop 113.

The biasing means 3 is formed so as to be in a band shape having a width of preferably 2 mm to 30 mm, more preferably 8 mm to 10 mm, and a thickness of preferably 0.5 mm to 3 mm, more preferably 1 mm to 2 mm.

When the biasing means 3 is formed so as to have such dimensions, it is possible to push up the open/close lid 2 without difficulty and to bent the biasing means 3 easily in the recessed portion 111 when the open/close lid 2 is closed.

As shown in FIG. 3, the biasing means 3 is bent at the base of the open/close lid 2 when the open/close lid 2 is closed. When a user pushes the latch 114 and disengages the body-side hook 1141 and the open/close-lid-side hook 21, the open/close lid 2 is opened to be in a state shown in FIG. 4 because of a repulsive force generated when the bent biasing means 3 returns to its original state.

When a user pushes the open/close lid 2 from the upper side, the biasing means 3 is bent, and the open/close lid 2 is closed to be in a state shown in FIG. 3.

### {Brake}

The brake 4 is provided so as to expose at the upper surface side of the upper container body 11 and in contact with a part of the open/close lid 2 that is in an opened state, so as to be in sliding contact with the open/close lid 2 until the open/close lid 2 stops pivoting.

As shown in FIG. 2 to FIG. 5, the brake 4 is a portion formed of an elastic material on the upper container body 11 so as to connect to the rear side of the body-side sealing loop 113 of the upper container body 11. In other words, the brake 4 is integrally formed with the biasing means 3 and the body-side sealing loop 113 formed with the elastic material of the upper container body 11.

The brake 4 is provided so as to expose at the upper surface side of the upper container body 11 with a tip of the brake 4 protruding through an insertion hole that is formed at the connecting portion between the open/close lid 2 and the upper container body 11 (or at a portion in contact with the connecting portion between the open/close lid 2 and the upper container body 11) on the upper surface of the upper container body 11.

The brake 4 is formed of an elastic material similar to those used in the take-out portion 112, the body-side sealing loop 113, and the biasing means 3 of the upper container body 11.

The brake 4 is formed so as to be in a band shape having a width of preferably 5 mm to 100 mm, more preferably 20 mm to 40 mm, and a thickness of preferably 0.5 mm to 3 mm, more preferably 1 mm to 2 mm.

The tip side of the brake 4 protrudes and exposes from the upper container body 11 for a length of 0.5 mm to 5 mm, more preferably 1 mm to 3 mm.

Since the brake 4 is formed to be such a size and is exposed from the upper container body 11, the exposing portion of the brake 4 is sure to be in contact with the pivoting open/close lid 2 and then in suitably sliding contact with the pivoting open/close lid 2, such that the brake 4 applies a frictional force to the open/close lid 2.

In other words, at the time of opening the open/close lid 2, the brake 4 is in contact with a part of the opened open/close lid 2 and applies a frictional force to the pivoting open/close lid 2 so as to suppress the momentum of the pivoting open/close lid 2, thereby having a function of putting a brake on the open/close lid 2.

Because the brake 4 is in contact with a part of the opened open/close lid 2 and can suppress the momentum of the pivoting open/close lid 2, the open/close lid 2 does not shake unsteadily due to the reaction of opening of the open/close lid 2. Therefore, the container body 1 does not wobble or shift from its original position.

### [Effect from Embodiment]

According to the household-use tissue storage container 100 of the present embodiment, when a user operates the latch 114 and disengages the opening/close lid 2, the open/close lid 2 jumps up automatically because of the biasing means 3. Therefore, it is easy to open the open/close lid 2 when using the household-use tissue.

In particular, because the household-use tissue storage container 100 has a brake 4 that comes into contact with a part of the opened open/close lid 2 and applies a frictional force to the pivoting open/close lid 2 so as put a brake on the open/close lid 2 by suppressing the momentum of the pivoting open/close lid 2, the open/close lid 2 or the container body 1 does not wobble due to the reaction of opening of the open/close lid 2. Accordingly, the household-use tissue storage container 100 does not shift from its original position or change its orientation.

Furthermore, the brake 4 is formed of the same elastic material as the portions formed of elastic materials such as the take-out portion 112 and the biasing means 3 of the upper container body 11, and can be formed integrally with the container body 1. Therefore, since there is no need to use different materials and the number of parts does not increase, the brake 4 does not lead to a decrease in productivity.

In the household-use tissue storage container 100 having the brake 4 as described above, the household-use tissue storage container 100 does not shift from its position originally put due to the reaction of opening of the open/close lid 2. As a result, it is possible to suitably open the open/close lid 2 of the household-use tissue storage container 100 placed at any desired position, and to take out the household-use tissue P for use from the storage container 100.

The take-out portion 112 having the outlet 112a is formed of the elastic material so as to apply appropriate resistance to the household-use tissue P that is pulled out from the take-out hole 112a. As a result, when a sheet of the household-use tissue P stored in the storage space S is pulled out, the next sheet of the household-use tissue P can be suitably held by the take-out portion 112. Furthermore, when the household-use tissue P is a roll sheet, the household-use tissue P can be suitably cut at its perforations for cutting.

The container body 1 is constituted by the upper container body 11 and the lower container body 12 that are connected to each other at the rear surface, accordingly, the container body 1 can be opened at its middle portion, and the household-use tissue P stored in the interior storage space S can be refilled.

Therefore, it is possible to refill the household-use tissue P while the container for housing household-use tissue 100 is not lifted from but left on the table or the like.

The upper container body 11 and the lower container body 12 are connected to each other at the rear surface and pivot relative to each other on the connecting portion as a pivot point. In this way, the storage space S can be opened and closed. Therefore, after refilling and the like, the upper container body 11 and the lower container body 12 can easily fit each other so that the container body is closed without aligning their positions each time. As a result, it is possible to reduce efforts at the time of refilling the inside household-use tissue P.

When the container body 1 is closed, the upper fitting portion 116 formed of an elastic material in the upper container body 11 and the lower fitting portion 121 formed of an elastic material in the lower container body 12 fit each other, and the airtightness of the container body 1 can be improved. This effect can be particularly enhanced when both the upper fitting portion 116 and the lower fitting portion 121 are made of an elastic material.

Because the lower nonslip portion 122 made of an elastic material is formed at the lower surface of the container body 1, the container body 1 can be placed more stably on the table or the like.

### [Modified Example]

The present invention is not limited to the above-described embodiments.

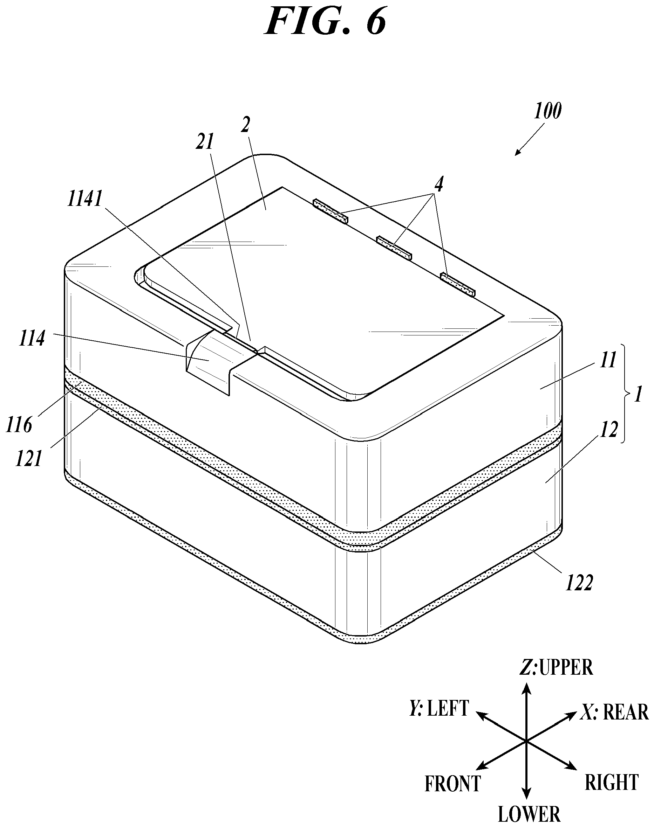

For example, as shown in FIG. 6, the household-use tissue storage container 100 may have a plurality of brakes 4 (three brakes 4 in this embodiment).

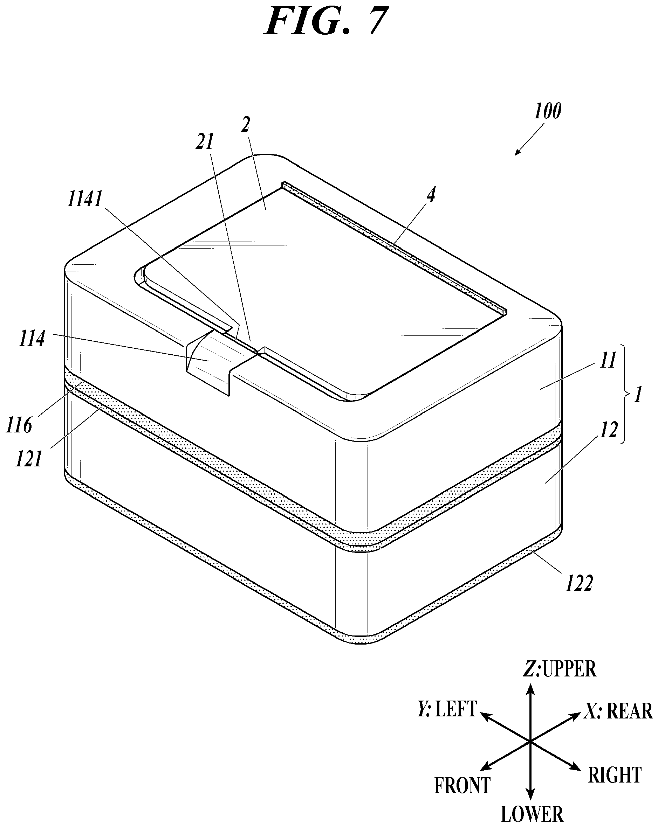

Alternatively, as shown in FIG. 7, the household-use tissue storage container 100 may have a wide brake 4 having approximately the same dimension as the spread of the open/close lid 2.

By suitably designing and changing the number and/or size of the brake(s) 4 as described above, it is possible to control the momentum of the pivoting open/close lid 2.

### [Other Embodiments]

In the above embodiments, the container body 1 of the household-use tissue storage container 100 has the brake 4. However, the open/close lid 2 of the household-use tissue storage container 100 may have the brake 4.

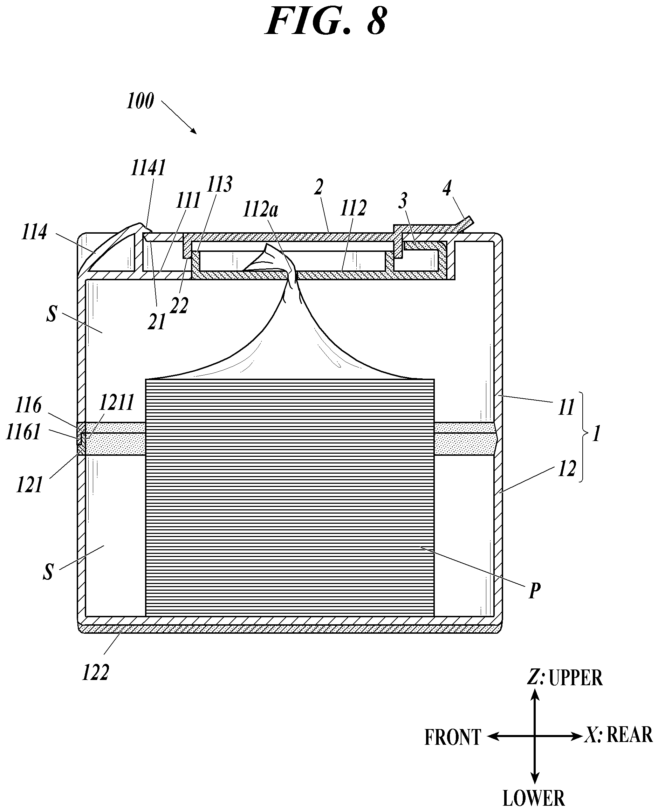

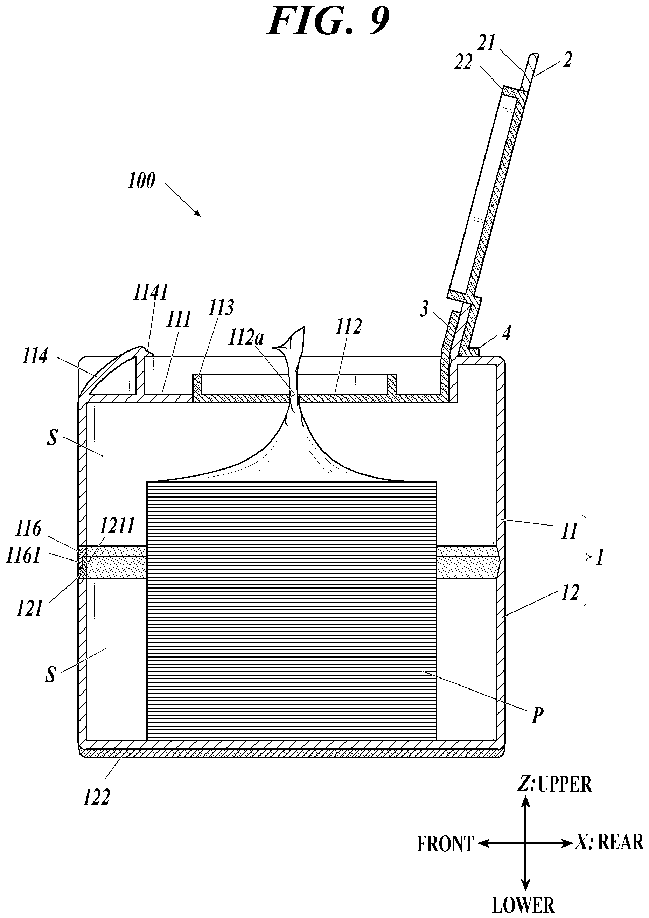

For example, as shown in FIG. 8 and FIG. 9, in the open/close lid 2 of the household-use tissue storage container 100, the open/close-lid-side sealing loop 22 is formed of an elastic material such as a thermoplastic elastomer of a styrene-butadiene type, polyester type, polyethylene type, or urethane type, and the brake 4 provided on the open/close lid 2 is formed of the similar elastic material.

The other portion(s) of the open/close lid 2 is formed of a polyolefin resin material such as polyethylene or polypropylene.

This open/close lid 2 is integrally formed by injection molding (double molding) . That is, the brake 4 is integrally formed with the open/close-lid-side sealing loop 22 made of the elastic material of the open/close lid 2.

The brake 4 is provided on the upper surface of the open/close lid 2 and has a free end portion that is formed so as to protrude at the upper surface side of the upper container body 11.

The brake 4 is arranged so as to be in contact with a part of the container body 1 (upper container body 11) when the open/close lid 2 is in an opened state, and in sliding contact with the container body 1 until the open/close lid 2 stops pivoting.

In other words, at the time of opening the open/close lid 2, the brake 4 is in sliding contact with a part of the container body 1 and applies a frictional force to the contacting surface so as to suppress the momentum of the pivoting open/close lid 2, thereby having a function of putting a brake on the open/close lid 2.

Because the brake 4 on the open/close lid 2 comes into contact with a part of the container body 1 and can suppress the momentum of the pivoting open/close lid 2, the open/close lid 2 does not shake unsteadily due to the reaction of opening of the open/close lid 2. Therefore, the container body 1 does not wobble or shift from its original position.

In the household-use tissue storage container 100 having the brake 4 as described above, the household-use tissue storage container 100 does not shift from its position originally put due to the reaction of opening of the open/close lid 2. As a result, it is possible to suitably open the open/close lid 2 of the household-use tissue storage container 100 placed at any desired position, and to take out the household-use tissue P for use from the storage container 100.

Furthermore, in the above embodiments, the container body 1 and the open/close lid 2 are integrally formed by injection molding (two-color molding), but the present invention is not limited thereto. The container body 1 and the open/close lid 2 can be formed separately and then connected rotatably using a hinge or the like, though the productivity is lowered.

Furthermore, in the above embodiments, the biasing means 3 is integrally formed with the container body 1 and the open/close lid 2, but the present invention is not limited thereto. The biasing means 3 may be formed separately from the container body 1 or the open/close lid 2 and attached to the container body 1 or the open/close lid 2.

The present invention is not limited to be applied to the above-described embodiment, and can be appropriately changed as long as it does not depart from the spirit of the present invention.

### Industrial Applicability

The present invention is configured as described above and can be used as a household-use tissue storage container having an open/close lid that can be readily opened.

### Reference Signs List

- 1: Container Body
- 111: Recessed Portion
- 112: Take-Out Portion
- 112a: Outlet
- 113: Body-Side Sealing Loop
- 114: Latch
- 2: Open/Close Lid
- 3: Biasing Means
- 4: Brake
- 100: Household-use Tissue Storage Container
- P: Household-use tissue

## Claims

1. A household-use tissue storage container comprising:
a container body that stores household-use tissue inside and has an outlet through which the household-use tissue is taken out; and
an open/close lid that is pivotably provided on the container body and closes the outlet; wherein
the container body has at least a part made of an elastic material,
the container body includes:
a latch that latches the open/close lid in a closed state and that opens the open/close lid in response to being unlatched;
a biasing means that biases the open/close lid in an opening direction; and
at least one brake that is integrally formed with the part made of the elastic material and that is in contact with a part of the open/close lid in an opened state.

2. The household-use tissue storage container according to claim 1, wherein, in response to being in contact with the part of the open/close lid, the brake is in sliding contact with the open/close lid until the open/close lid stops pivoting.

3. A household-use tissue storage container comprising:
a container body that stores household-use tissue inside and has an outlet through which the household-use tissue is taken out; and
an open/close lid that is pivotably provided on the container body and closes the outlet; wherein
the open/close lid has at least a part made of an elastic material,
the container body includes:
a latch that latches the open/close lid in a closed state and that opens the open/close lid in response to being unlatched; and
a biasing means that biases the open/close lid in an opening direction,
the open/close lid includes at least one brake that is integrally formed with the part made of the elastic material and that is in contact with a part of the container body upon the open/close lid being in an opened state.

4. The household-use tissue storage container according to claim 3, wherein, in response to being in contact with the part of the container body, the brake is in sliding contact with the container body until the open/close lid stops pivoting.

5. The household-use tissue storage container according to any one of claims 1 to 4, wherein the at least one brake includes a plurality of brakes.

6. The household-use tissue storage container according to any one of claims 1 to 5, wherein the biasing means is integrally formed with the part made of the elastic material.
